(19) Europäisches Patentamt

European Patent Office

Office européen des brevets

(11) **EP 3 908 926 B1**

(12) **FASCICULE DE BREVET EUROPEEN**

(45) Date de publication et mention
de la délivrance du brevet:
**24.09.2025 Bulletin 2025/39**

(21) Numéro de dépôt: **20713730.8**

(22) Date de dépôt: **26.02.2020**

(51) Classification Internationale des Brevets (IPC):
**G06F 9/448** *(2018.01)* **G06F 9/54** *(2006.01)*

(52) Classification Coopérative des Brevets (CPC):
**G06F 9/54; G06F 9/4494**

(86) Numéro de dépôt international:
**PCT/FR2020/050377**

(87) Numéro de publication internationale:
**WO 2020/174186 (03.09.2020 Gazette 2020/36)**

(54) **PROCÉDÉ DE VALIDATION D'UN SYSTÈME FLOTS DE DONNÉES**

VERFAHREN ZUR VALIDIERUNG EINES DATENFLUSSSYSTEMS

METHOD OF VALIDATION OF A DATA FLOW SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.02.2019 FR 1902028**

(43) Date de publication de la demande:
**17.11.2021 Bulletin 2021/46**

(73) Titulaire: **Commissariat à l'Energie Atomique et
aux Energies
Alternatives
75015 Paris (FR)**

(72) Inventeurs:
• **IROFTI, Dina
91400 ORSAY (FR)**
• **DUBRULLE, Paul
75014 PARIS (FR)**

(74) Mandataire: **Brevalex
56, Boulevard de l'Embouchure
B.P. 27519
31075 Toulouse Cedex 2 (FR)**

(56) Documents cités:
**FR-A1- 3 026 205 US-A1- 2016 217 029**

• **LEE, MESSERSCHMITT: "SYNCHRONOUS DATA
FLOW", PROCEEDINGS OF THE IEEE, VOL. 75, N
°9, vol. 75, no. 9, 1 September 1987 (1987-09-01),
pages 1235 - 1245, XP000048475**

## Description

La présente invention concerne un procédé et un dispositif de validation d'un système flots de données, et plus particulièrement la vérification de la cohérence du système.

## Etat de la technique antérieure

La présente invention s'applique à des systèmes dans lesquels des applications concrètes utilisent des fonctions d'interface prédéfinies pour s'échanger des données entre elles. En particulier, l'invention s'applique à tous les systèmes (ou applications) flots de données de types synchrones comportant des composants (ou tâches) appelés acteurs, connectés entre eux par des canaux (ou connexions) de communication unidirectionnels. Ces systèmes sont souvent utilisés pour décrire le comportement des applications de traitement du signal, car ils fournissent une sémantique d'exécution adéquate pour analyser leurs performances. Les critères les plus courants pour l'analyse des performances sont directement liés à l'optimisation du dimensionnement de la mémoire tampon, du débit ou de la latence. Une première étape dans la résolution de ces problèmes d'optimisation consiste à vérifier quelques propriétés, telles que l'existence d'une limite supérieure pour les tailles de mémoire tampon et l'absence de blocages. Ces propriétés sont avantageusement décidables dans un système flots de données en vérifiant des propriétés de cohérence et d'absence d'inter-blocage décrits plus loin.

Un système flots de données est en général modélisé par un graphe de flot de données. Le graphe de flots de données décrit une structure de flots de données dans laquelle les acteurs sont représentés par des nœuds (ou sommets) et les canaux de communication par des arcs. Chaque acteur du graphe de flots de données dispose d'un ensemble de ports. Chaque port représente un point d'extrémité du canal de communication. Les acteurs ont généralement un comportement cyclique, appelé *activation ou tir* (firing en anglais) consistant à lire des données d'entrée à partir de leurs ports d'entrée, à exécuter leurs tâches et à placer des données de sortie sur leurs ports de sortie. Un tir ne peut avoir lieu que lorsque l'acteur dispose de suffisamment d'informations sur ses ports d'entrée. La quantité de données envoyée sur les ports de sortie ou reçue depuis les ports d'entrée est spécifiée par un nombre de jetons. Les taux de production (respectivement, consommation) représentent le nombre de jetons qu'un acteur peut envoyer (respectivement, recevoir) lorsqu'il fait un tir. On notera que dans un flot de données de type synchrone, les taux de consommation et de production sont constants.

Un système flots de données peut être planifié de manière statique, car chaque acteur du graphe de flots de données produit et utilise la même quantité de données à chaque fois qu'il fait un tir. De plus, un programme périodique peut être construit pour un système flots de données synchrones, étant donné que tous les taux de consommation et de production sont fixes. Dans un ordonnancement périodique valide, chaque acteur s'active (i.e. tire) un certain nombre de fois avant que le graphe ne revienne à son état initial, avec le même nombre de jetons initialement sur les canaux.

Généralement, un vecteur de répétition valide est construit lors de la planification d'un système flots de données SDF. Le vecteur de répétition est un vecteur dont les composants sont des nombres entiers positifs, et dont la dimension est égale au nombre d'acteurs appartenant au graphe de flux de données. Chaque composant du vecteur correspond à un acteur et spécifie le nombre de tirs déclenchés par l'acteur pendant le programme périodique. On peut trouver plus d'un vecteur de répétition pour un graphe donné. Le vecteur de répétition minimale a la norme minimale et correspond à un ordonnancement périodique minimal. On notera que le vecteur de répétition est utilisé pour vérifier la validité du système flots de données.

En effet, pour trouver une planification périodique valide d'un système flots de données, le graphe de flots de données modélisant le système doit vérifier des propriétés de cohérence (consistency, en anglais) et d'absence d'inter-blocage (deadlock, en anglais). La propriété de cohérence concerne le fait que lors des périodes d'exécution, les jetons dans un graphe de flots de données ne s'accumulent pas sur les canaux unidirectionnels. Il est connu [2] que l'existence d'un vecteur de répétition non nul est une condition nécessaire à la cohérence d'un graphe de flots de données, c'est-à-dire qu'elle ait un ordonnancement périodique valide. Par ailleurs, la propriété d'absence d'inter-blocage (appelée également, vivacité) signifie que les acteurs ont suffisamment de jetons sur leurs entrées pour continuer à faire des tirs. On notera que les propriétés de cohérence et d'absence d'inter-blocage sont indépendantes.

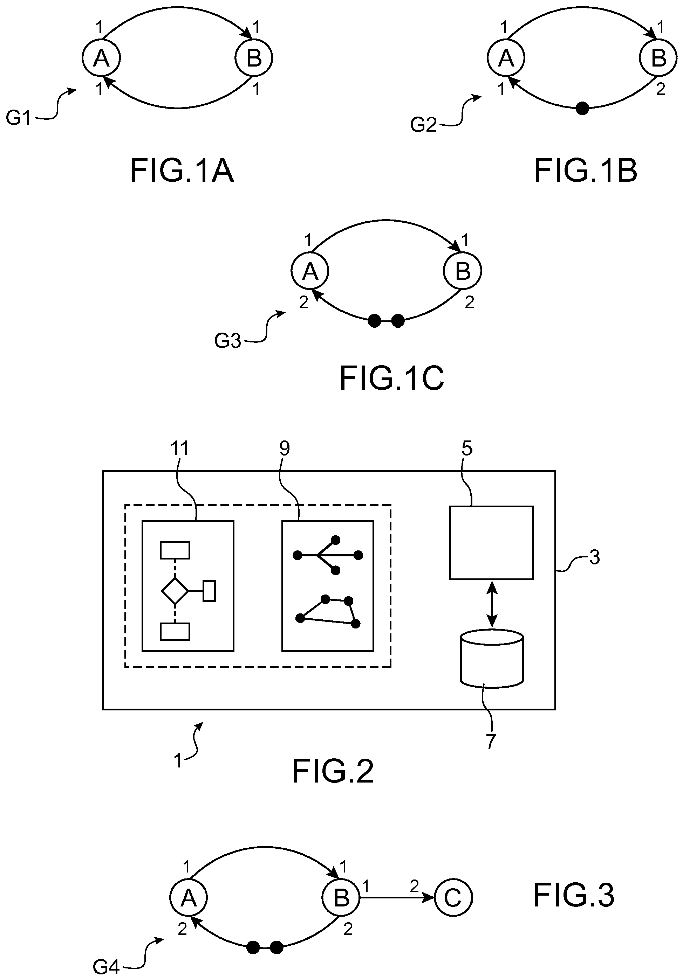

Les Figs. 1A-1C illustrent des exemples de graphes de flots de données à deux acteurs montrant les propriétés de cohérence et d'absence d'inter-blocage, selon l'état de l'art.

L'exemple de la Fig. 1A illustre un graphe cohérent mais présentant un inter-blocage. En effet, ce graphe G1 est cohérent car aucun jeton ne s'accumule sur les canaux. L'acteur A produit un jeton, qui est consommé par l'acteur B, ensuite, l'acteur B tire et produit un jeton, lequel est consommé par l'acteur A, et ainsi de suite. Le vecteur de répétition correspondant au graphe G1 est X1=(1 1), ce qui signifie que chacun des acteurs A et B s'active (tire) une fois avant que le graphe G1 ne revienne à son état initial. Toutefois, ce graphe G1 n'est pas exempt d'inter-blocage car il n'y a pas de jeton initial sur les canaux, ce qui signifie que ni l'acteur A ni l'acteur B ne peuvent commencer à tirer.

L'exemple de la Fig. 1B illustre un graphe G2 non-cohérent mais présentant une absence d'inter-blocage. Le canal unidirectionnel allant de B vers A contient un jeton initial. L'acteur A consomme ce jeton initial et produit un autre jeton, qui est à son tour consommé par l'acteur B. Ensuite, l'acteur B produit deux jetons par tir, de sorte que l'acteur A ait suffisamment de jetons sur ses entrées pour continuer à tirer. Toutefois, les jetons continueront à s'accumuler sur les ports d'entrées de l'acteur A car le rythme de consommation par ce dernier n'est pas aussi rapide que celui de production par l'acteur B. Dans ce cas, aucun vecteur de répétition ne peut être trouvé pour ce graphe G2, ce qui signifie qu'il n'est pas cohérent.

En contraste, l'exemple de la Fig. 1C illustre un graphe G3 satisfaisant à la fois la propriété de cohérence et de vivacité (i.e. absence d'inter-blocage). En effet, l'acteur A consomme les deux jetons initiaux sur son port d'entrée et produit un jeton sur le port de sortie. Ensuite, l'acteur B consomme un jeton et produit deux jetons sur son port de sortie, ce qui signifie que le graphe G3 revient dans son état initial. Le vecteur de répétition correspondant au graphe G3 est alors X3=(1 1). L'existence d'un tel vecteur de répétition (non nul) signifie que le graphe G3 est cohérent. Par ailleurs, une façon de vérifier l'absence d'inter-blocage, comme proposé dans [12], consiste à déclencher chaque nœud le nombre de fois spécifié par le vecteur de répétition. Si le graphe de flots de données n'a pas d'inter-blocage pendant ce test, alors il est libre de tout inter-blocage.

La propriété de cohérence est importante car si un vecteur de répétition ne peut pas être trouvé pour un graphe de flots de données donné, alors tout système flots de données correspondant à ce graphe se retrouvera soit dans une impasse, soit dans des tailles de mémoires tampons sans limite supérieure.

Actuellement, le formalisme généralement utilisé dans l'état de l'art pour la vérification de la cohérence est basé sur l'extraction d'une matrice dite « matrice de topologie » du graphe de flux de données. Ce formalisme est décrit par Lee et Messerschmitt [1, 2] pour les graphes de flots de données synchrones. La matrice de topologie décrit la manière dont le graphe est connecté et les quantités d'informations que chaque acteur dans le graphe peut envoyer ou recevoir à chaque tir. La matrice de topologie est généralement désignée par la lettre gamma $\Gamma$. Chaque acteur du graphe de flots de données possède une colonne dans la matrice de topologie $\Gamma$ et chaque canal (connexion) est affecté à une ligne. Ainsi, la (i, j)ème entrée de la matrice de topologie $\Gamma$ correspond au taux de production ou de consommation du nœud j sur le canal i. Par convention, les taux de production sont désignés par des nombres positifs tandis que les taux de consommation sont désignés par des nombres négatifs.

Selon la définition ci-dessus, les matrices de topologie $\Gamma$1, $\Gamma$2 et $\Gamma$3 correspondant aux graphes G1, G2 et G3 illustrés sur les Figs. 1A-1C sont :

$$\Gamma 1 = \begin{pmatrix} 1 & -1 \\ -1 & 1 \end{pmatrix}, \; \Gamma 2 = \begin{pmatrix} 1 & -1 \\ -1 & 2 \end{pmatrix}, \text{et } \Gamma 3 = \begin{pmatrix} 1 & -1 \\ -2 & 2 \end{pmatrix} \quad (1)$$

Un vecteur de répétition non nul, ici noté X, peut éventuellement être trouvé en résolvant l'équation matricielle suivante :

$$\Gamma \vec{X} = \vec{0} \quad (2)$$

L'existence d'un vecteur de répétition X non nul est une condition nécessaire pour l'existence d'un ordonnancement périodique dans lequel les tailles de mémoire tampon restent limitées. La résolution de l'équation matricielle pour les graphes G1, G2 et G3 donne les vecteurs indiqués ci-dessus : X1=(1 1), X2=(0 0) et X3=(1 1).

Ainsi, pour pouvoir vérifier s'il existe un vecteur de répétition X non nul, il est auparavant nécessaire de construire entièrement le graphe de flots de données. En d'autres termes, il faut que le système flot de données soit dans sa forme finale avant de pouvoir vérifier si le système est cohérent ou non.

Cette méthode est très couteuse en temps et en calcul et au cas où le système flot de données a été jugé non-cohérent, la méthode ne permet pas de détecter les éléments responsables de cette incohérence. De plus, si on ajoute une nouvelle tâche ou acteur à un système flot de données déjà cohérent, on est obligé à nouveau de reconsidérer tout le système flot de données ainsi modifié avant de décider si ce dernier reste cohérent.

L'objet de la présente invention est, par conséquent, de proposer un procédé de validation d'un système flots de données de type synchrones remédiant aux inconvénients précités, en particulier, en permettant une vérification rapide et simple de la cohérence au cas où des nouvelles tâches sont ajoutées ainsi qu'en permettant l'identification des éléments non-cohérents.

## Présentation de l'invention

La présente invention concerne un procédé de validation d'un système flots de données représenté par un graphe de flots de données comportant des acteurs présentant des taux de production et des taux de consommation déterminés, ledit procédé étant caractérisé par une vérification incrémentielle dans laquelle la cohérence d'une connexion unidirectionnelle courante reliant une première partie courante du graphe de flots de données à une deuxième partie courante du graphe de flots de données est localement vérifiée à chaque incrément, ladite vérification incrémentelle comportant les étapes suivantes :

- définir des acteurs d'origine et d'arrivée reliés par ladite connexion unidirectionnelle courante, les acteurs d'origine et d'arrivée appartenant auxdites première et deuxième parties courantes du graphe de flots de données respectivement, les acteurs d'origine et d'arrivée étant définis par des composants d'origine $x_i$ et d'arrivée $x_j$ respectivement pouvant appartenir à un unique vecteur courant de répétition ou à deux vecteurs courants de répétition représentatif(s) desdites première et deuxième parties courantes du graphe de flots de données,
- attribuer à ladite connexion unidirectionnelle courante un taux de production $r_i$ relatif à l'acteur d'origine et un taux de consommation $r_j$ relatif à l'acteur d'arrivée,
- vérifier un indicateur de cohérence locale de ladite connexion unidirectionnelle courante, ledit indicateur de cohérence locale examinant si le produit dudit taux de production $r_i$ fois ledit composant d'origine $x_i$ est égal au produit dudit taux de consommation $r_j$ fois ledit composant d'arrivée $x_j$,
- définir un vecteur courant de répétition résultant représentatif desdites première et deuxième parties courantes du graphe de flots de données.

Ainsi, la cohérence peut être vérifiée localement lors de la construction du graphe flots de données ou lors de l'ajout d'une nouvelle connexion sans reconsidérer tout le graphe de flots de données. En effet, la cohérence de la nouvelle connexion peut être évaluée en prenant en compte l'état du graphe précédent.

Avantageusement, au cas où ladite connexion unidirectionnelle courante vérifie l'indicateur de cohérence locale, ledit procédé comporte les étapes suivantes : -si les acteurs d'origine et d'arrivée sont associés à deux vecteurs courants de répétitions distincts, dits vecteurs de répétition d'origine et d'arrivée, alors on construit le vecteur courant de répétition résultant en concaténant lesdits vecteurs de répétions d'origine et d'arrivée, et -si les acteurs d'origine et d'arrivée sont associés à un unique vecteur courant de répétition, alors le vecteur courant de répétition résultant est égal audit unique vecteur courant de répétition.

Ainsi, à chaque fois qu'une nouvelle connexion est ajoutée, on peut directement savoir si cette nouvelle connexion est cohérente ou pas.

Avantageusement, au cas où ladite connexion unidirectionnelle courante ne vérifie pas l'indicateur de cohérence locale ledit procédé comporte les étapes suivantes : -si les acteurs d'origine et d'arrivée sont associés à deux vecteurs courants de répétitions distincts, dits vecteurs de répétition d'origine et d'arrivée, alors on calcule deux nombres naturels, dits coefficient de production $c_i$ et coefficient de consommation $c_j$ vérifiant une égalité entre d'une part le produit dudit coefficient de production $c_i$ fois ledit taux de production $r_i$ fois ledit composant d'origine $x_i$ et d'autre part, le produit dudit coefficient de consommation $c_j$ fois ledit taux de consommation $r_j$ fois ledit composant d'arrivée $x_j$, et on construit le vecteur courant de répétition résultant en concaténant le vecteur de répétition d'origine après l'avoir multiplié par le coefficient de production $c_i$ avec le vecteur de répétition d'arrivée après l'avoir multiplié par le coefficient de consommation $c_j$, et -si les acteurs d'origine et d'arrivée sont associés à un unique vecteur courant de répétition, alors la connexion unidirectionnelle courante est identifiée comme étant non cohérente.

Ainsi, ce procédé permet d'identifier quel élément du système flots de données est incohérent.

Avantageusement, les coefficients de production $c_i$ et de consommation $c_j$ sont donnés par les équations suivantes :

$$c_i = \frac{m\,x_i}{d\,r_i} \Big/ pgcd\left(\frac{m\,x_i}{d\,r_i}, \frac{m\,x_j}{d\,r_j}\right) \quad et \quad c_j = \frac{m\,x_j}{d\,r_j} \Big/ pgcd\left(\frac{m\,x_i}{d\,r_i}, \frac{m\,x_j}{d\,r_j}\right)$$

où

$$m = ppcm(r_i, r_j) \ et \ d = pgcd(x_i, x_j).$$

Avantageusement, le procédé comporte une opération d'addition d'une nouvelle connexion unidirectionnelle entre des première et deuxième parties courantes du graphe de flots de données.

Ainsi, le procédé peut être efficacement utilisé pour des systèmes flots de données modulaires.

Avantageusement, le procédé comporte une opération de suppression d'une connexion unidirectionnelle du graphe de flots de données représenté par un unique vecteur de répétition, dit vecteur de répétition initial, selon les étapes suivantes :

- si le graphe de flots de données se divise en des premier et deuxième sous-graphes de flots de données après la suppression de ladite connexion unidirectionnelle, alors on construit un premier vecteur de répétition en regroupant les composants dudit vecteur de répétition initial relatifs audit premier sous-graphe de flots de données, et on construit un deuxième vecteur de répétition en regroupant les composants du vecteur de répétition initial relatifs audit deuxième sous-graphe de flots de données, et

- si le graphe reste connexe après la suppression de ladite connexion unidirectionnelle, alors on ne modifie pas ledit vecteur de répétition initial.

Avantageusement, le procédé comporte une opération de modification d'une connexion unidirectionnelle, selon les étapes suivantes :

- attribuer des nouveaux taux de production r'$_i$ et de consommation r'$_j$ relatifs aux acteurs d'origine et d'arrivée reliés par ladite connexion unidirectionnelle,
- appliquer l'opération de suppression d'une connexion unidirectionnelle, et
- appliquer l'opération d'addition d'une connexion unidirectionnelle.

Avantageusement, le procédé comporte la vérification de la cohérence du graphe de flots de données lors de sa construction en attribuant à chaque acteur d'arrivée additionnel un vecteur additionnel de répétition dont son unique composant x$_i$ est égal à 1, ledit acteur d'arrivée additionnel étant relié par ladite connexion unidirectionnelle courante à un acteur d'origine appartenant audit graphe courant de flots de données en construction.

La présente invention vise également un système de traitement de signal numérique conçu en utilisant le procédé de validation selon l'une quelconque des caractéristiques précédentes, ledit système de traitement étant modélisé par un système flots de données comportant des acteurs connectés entre eux par des connexions de communications unidirectionnelles, chaque acteur étant configuré pour recevoir des données d'entrées et pour délivrer des données de sortie.

Avantageusement, ledit système est un système parmi l'un quelconque des systèmes de traitement suivants : système d'imagerie médicale, système de vision par ordinateur, système de codage et compression vidéo, système de conversion d'une fréquence d'échantillonnage audio, système de conception d'outils pour les systèmes de communication sans fil, système d'amélioration de la parole multicanal, système embarqué.

La présente invention vise aussi un dispositif de validation d'un système flots de données représenté par un graphe de flots de données comportant des acteurs présentant des taux de production et des taux de consommation déterminés, ledit système comportant :

- un module d'acquisition configuré pour acquérir des données concernant des première et deuxième parties courantes du graphe de flots de données, et
- un module de supervision configuré pour vérifier de manière incrémentielle la cohérence dudit système flots de données en vérifiant à chaque incrément la cohérence locale d'une connexion unidirectionnelle courante reliant la première partie courante du graphe de flots de données à la deuxième partie courante du graphe de flots de données.

**Brève description des figures**

D'autres particularités et avantages du dispositif et du procédé selon l'invention ressortiront mieux à la lecture de la description faite ci-après, à titre indicatif mais non limitatif, en référence aux dessins annexés sur lesquels :

[Fig. 1A]
[Fig. 1B]
[Fig. 1C] illustrent des exemples de graphes flots de données à deux acteurs montrant les propriétés de cohérence et d'absence d'inter-blocage, selon l'état de l'art ;
[Fig. 2] illustre de manière schématique un dispositif et un procédé de validation d'un système flots de données, selon un mode de réalisation de l'invention ;
[Fig. 3] est un graphe flots de données illustrant la vérification de cohérence d'une connexion, selon un mode de réalisation de la présente invention ;
[Fig. 4] est un organigramme illustrant les étapes d'un procédé de validation d'un système flots de données, selon un mode de réalisation préféré de l'invention ;
[Fig. 5] illustre de manière schématique la construction d'un graphe flots de données selon le procédé de la Fig. 4 ;
[Fig. 6] illustre de manière schématique la connexion de deux graphes distincts, selon le procédé de la présente invention ;
[Fig. 7] est un organigramme illustrant les étapes d'un procédé de validation comportant une opération de suppression, selon un mode de réalisation préféré de l'invention ;

[Fig. 8] un organigramme illustrant les étapes d'un procédé de validation comportant une opération de modification, selon un mode de réalisation préféré de l'invention ;

[Fig. 9A] et

[Fig. 9B] illustrent à titre d'exemple la vérification de cohérence dans un système de flots de données modélisant un dispositif d'amélioration de la parole multicanal, selon la présente invention.

## Description détaillée de l'invention

Le principe de la présente invention est de vérifier la cohérence d'un système flots de données de manière incrémentielle et locale. La présente invention s'intéresse en particulier, aux systèmes flots de données dont les acteurs ont des taux de consommation et de production déterminés (i.e. définis ou quantifiables). Par exemple, le système peut être un système flots de données synchrones de type SDF (Synchronous dataflow) ou un système flots de données synchrones et cycliques.

La Fig. 2 illustre de manière schématique un dispositif et un procédé de validation d'un système flots de données, selon un mode de réalisation de l'invention.

Le dispositif de validation 1 est mis en œuvre par des moyens matériels comportant une machine de traitement de l'information tel un calculateur ou ordinateur 3 comportant un microprocesseur 5 et des mémoires 7. Le microprocesseur 5 est configuré pour exécuter un ou plusieurs programmes d'ordinateur comprenant des instructions de code de programme, stockés dans les mémoires 7 de l'ordinateur et conçus pour mettre en œuvre la validation d'un système de flots de données.

Conformément à l'invention, le dispositif de validation 1 comporte un module d'acquisition 9 et un module de supervision 11.

Le module d'acquisition 9 est configuré pour acquérir des données concernant un graphe courant de flots de données et plus particulièrement, des données concernant des première et deuxième parties courantes du graphe de flots de données ainsi qu'une connexion courante entre ces deux parties. Par première ou deuxième partie courante d'un graphe de flots de données, on entend une partie du graphe comportant au moins un seul acteur.

De manière générale, un graphe de flots de données comporte des acteurs indépendants s'échangeant entre eux des informations quantifiables, à travers des connexions (i.e. canaux) de communications unidirectionnelles. Les acteurs peuvent être des entités logicielles (par exemple, des applications) et/ou matérielles (par exemple, des capteurs, caméras, sondes, microprocesseurs, etc.). Les acteurs sont représentés par des nœuds (ou sommets) et les connexions de communication par des arcs. Chaque acteur est configuré pour attendre d'avoir reçu une quantité de données spécifiée sur ses ports d'entrée dans le but de consommer cette quantité de données, d'effectuer (ou pas) un traitement de ces données et de produire une quantité de données spécifiée sur ses ports de sortie à destination de nouveaux acteurs, et chacun répétant ce comportement indéfiniment. Le processus cyclique de consommation/traitement/émission est communément appelé une *activation* ou un *tir.*

Dans des flots de données synchrones, tous les acteurs ont des taux de consommation et de production déterminés (quantifiables), et ces taux sont connus lors de la construction du graphe de flots de données. Les nœuds du graphe de flots de données peuvent être mappés sur différentes unités de calcul, afin que les tâches puissent être exécutées dans un certain ordre. Cette procédure s'appelle la planification qui peut être effectuée de manière statique (au moment de la compilation) ou dynamique (au moment de l'exécution).

Le module de supervision 11 est configuré pour vérifier de manière incrémentielle la cohérence du système flots de données en vérifiant à chaque incrément la cohérence locale de la connexion unidirectionnelle courante reliant la première partie courante du graphe de flots de données à la deuxième partie courante du graphe de flots de données.

Par ailleurs, on notera que l'absence d'inter-blocage peut être vérifiée en déclenchant chaque nœud le nombre de fois spécifié par le vecteur de répétition. Si aucun d'inter-blocage n'a été décelé pendant ce test, le graphe de flots de données est alors libre de tout blocage.

Dans la suite, on note X le vecteur de répétition et par $x_i$ le $i^{ème}$ composant du vecteur de répétition X. On considère par convention que lorsqu'un acteur est créé, un vecteur de répétition lui est associé ne comportant qu'un seul composant dont la valeur est égale à un.

Par ailleurs, la vérification locale et incrémentielle de la cohérence selon l'invention se base sur la proposition suivante et son corollaire ainsi que sur leurs implications. Proposition : Si un graphe G de flots de données est cohérent et a un vecteur de répétition valide X, alors kX est également un vecteur de répétition valide pour tout nombre naturel k (i.e. k ε Z).

Corollaire : Considérons un graphe de flots de données cohérent avec n acteurs et un vecteur de répétition valide X = [$x_1$ $x_2$... $x_n$]. Supposons qu'en raison d'une contrainte de conception supplémentaire, le $i^{ème}$ composant du vecteur X doit être modifié. On note $x^*_i$ la nouvelle valeur du $i^{ème}$ composant du vecteur X. Alors, afin de préserver la cohérence du graphe de flux de données, les valeurs de tous les autres composants $x_j$ du vecteur X (i.e. $x_j$, j = 1... n, et j ≠ n) doivent être multipliées par $x^*_i / x_i$.

Ainsi, lorsqu'une nouvelle connexion unidirectionnelle est créée entre deux acteurs $a_i$ et $a_j$ ayant des taux de production et de consommation $r_i$ et $r_j$ respectivement et étant représentés par des composants $x_i$ et $x_j$ respectivement, la nouvelle connexion unidirectionnelle est considérée comme étant cohérente si l'on peut trouver deux nombres naturels $c_i$ et $c_j$ (i.e. $c_i \in Z$ et $c_j \in Z$), dits coefficients de production $c_i$ et de consommation $c_j$, satisfaisant une propriété de cohérence. Cette propriété est une égalité entre d'une part le produit du coefficient de production $c_i$ fois le taux de production $r_i$ fois le composant d'origine $x_i$ et d'autre part, le produit du coefficient de consommation $c_j$ fois le taux de consommation $r_j$ fois le composant d'arrivée $x_j$ selon l'équation suivante :

$$c_i r_i x_i = c_j r_j x_j \quad (3)$$

En effet, la Fig. 3 est un graphe flots de données illustrant la vérification de cohérence d'une connexion, selon l'équation (3) ci-dessus.

Plus particulièrement, l'exemple de la Fig. 3 illustre un graphe G4 résultant de la modification du graphe cohérent G3 de la Fig. 1C en lui ajoutant un nouvel acteur C et une nouvelle connexion entre l'acteur B et l'acteur C. On notera que cette modification peut être vue soit comme une modification du graphe initial G3 illustré dans la Fig. 1C, soit comme une étape parmi d'autres dans la construction itérative du graphe G4 de la Fig. 3. Dans les deux cas, la modification consiste à ajouter la nouvelle connexion entre l'acteur B et l'acteur C. Soient $X_G$ et $X_C$ les vecteurs de répétition du graphe initial G3 et de l'acteur C respectivement. Dans ce cas, le second composant $x_B$ du vecteur de répétition $X_G$ associé au graphe initial G3 est égal à 1 (i.e. $x_B$ =1) et par convention le seul composant $x_C$ du vecteur de répétition $X_C$ de l'acteur C est égal à 1 (i.e. $x_C$ =1). Sur cette nouvelle connexion, l'acteur B produit un jeton, ce qui signifie $r_B$ =1, et l'acteur C consomme deux jetons, ce qui signifie $r_C$ =2. On a vu précédemment que le vecteur de répétition $X_G$ correspondant au graphe initial G3 est $X_G$=(1 1). Afin de calculer le nouveau vecteur de répétition $X'_G$ résultant de la connexion, il suffit de trouver deux nombres naturels $c_1$ et $c_2$ vérifiant l'équation (3) ci-dessus. En remplaçant les variables connues dans l'équation (3), on obtient $c_1$=2$c_2$. Par ailleurs, on peut déterminer un vecteur de répétition minimal, en choisissant $c_1$=2 et $c_2$=1. Ainsi, les valeurs correspondant aux acteurs B et C dans le nouveau vecteur de répétition $X'_G$ seront respectivement $x^*_B$=$c_1 x_B$ =2 et $x^*_C$=$c_2 x_C$ =1. Dans ce cas, la propriété de cohérence est préservée par la proposition énoncée ci-dessus. En outre, en conformité avec le corollaire ci-dessus, le composant du vecteur de répétition correspondant à l'acteur A doit également être changé. Ainsi, après la connexion des acteurs B et C, le nouveau vecteur de répétition $X'_G$ du graphe de la Fig. 3 est $X'_G$=(2 2 1).

On remarque qu'il n'est nullement nécessaire de calculer une nouvelle matrice de topologie Γ pour le graphe G4 de la Fig. 3. Il suffisait seulement de trouver les coefficients $c_1$ et $c_2$ et ensuite d'appliquer le corolaire ci-dessus. Néanmoins, on remarque que le nouveau vecteur de répétition $X'_G$ =(2 2 1) trouvé ci-dessus satisfait à l'équation (2) avec une matrice de topologie donnée par :

$$\Gamma = \begin{pmatrix} 1 & -1 & 0 \\ -2 & 2 & 0 \\ 0 & 1 & -2 \end{pmatrix} \quad (4)$$

Dans ce qui suit, on montre une manière de choisir les coefficients $c_i$ et $c_j$ de manière à satisfaire l'équation (3) pour le cas général dans lequel deux acteurs, dits acteur d'origine $a_j$ de composant $x_i$ et acteur d'arrivée $a_j$ de composant $x_j$ sont connectés. En particulier, en choisissant $c_i = x_j / r_i$ et $c_j = x_i / r_j$ et en les remplaçant dans l'équation (3), on obtient :

$$\frac{x_j}{r_i} r_i x_i = \frac{x_i}{r_j} r_j x_j \quad (5)$$

Cette équation est bien entendu toujours vraie. Toutefois, ce choix de paramètres ne garantit pas des valeurs entières pour les coefficients $c_i$ et $c_j$. Alors, pour que ces coefficients soient entiers, on multiplie l'égalité (5) ci-dessus par le plus petit commun multiplicateur *ppcm* des taux de production $r_i$ et de consommation $r_j$ et on divise par le plus grand commun diviseur *pgcd* des composants $x_i$ et $x_j$ des acteurs d'origine et d'arrivée respectivement. Ceci donne les coefficients de production $c_i$ et de consommation $c_j$, suivants :

$$c_i = \frac{m}{d}\frac{x_j}{r_i} \quad et \quad c_j = \frac{m}{d}\frac{x_i}{r_j} \quad où \quad m = ppcm(r_i, r_j) \, et \, d = pgcd(x_i, x_j) \quad (6)$$

Les coefficients $c_i$ et $c_j$ selon l'équation (6) satisfont la condition de cohérence de l'équation (3).

Afin de déterminer le vecteur de répétition minimal, les composants initiaux du vecteur de répétition ne sont multipliés que par des coefficients définis par leur plus grand commun diviseur:

$$c_i = \frac{m \, x_j}{d \, r_i} \Big/ pgcd\left(\frac{m \, x_j}{d \, r_i}, \frac{m \, x_i}{d \, r_j}\right) \quad \text{et} \quad c_j = \frac{m \, x_i}{d \, r_j} \Big/ pgcd\left(\frac{m \, x_j}{d \, r_i}, \frac{m \, x_i}{d \, r_j}\right) \quad (7)$$

Les coefficients $c_i$ et $c_j$ définis dans les équations (7) vérifient, bien entendu, l'égalité (3). Par exemple, lorsqu'une nouvelle connexion est établie entre les acteurs $a_i$ et $a_j$, le composant $x_i$ du vecteur de répétition correspondant à l'acteur $a_i$ est multiplié par $c_i$, et le composant $x_j$ correspondant à l'acteur $a_j$ est multiplié par le coefficient $c_j$ afin de conserver la propriété de cohérence du graphe.

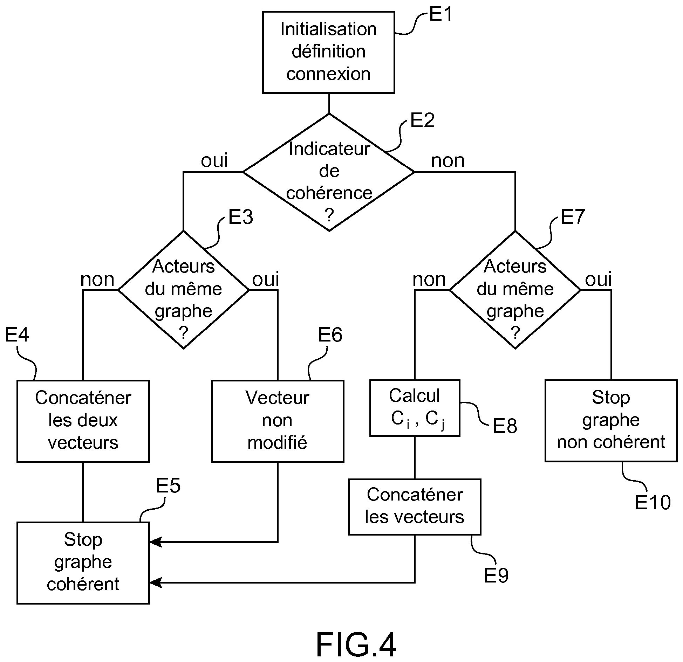

La Fig. 4 est un organigramme illustrant les étapes d'un procédé de validation d'un système flots de données, selon un mode de réalisation préféré de l'invention.

Dans ce procédé, on vérifie la cohérence d'une connexion unidirectionnelle courante reliant une première partie courante du graphe de flots de données à une deuxième partie courante du graphe de flots de données.

A l'étape E1, on définit la connexion unidirectionnelle courante reliant des acteurs d'origine $a_i$ et d'arrivée $a_j$. Les acteurs d'origine $a_i$ et d'arrivée $a_j$ appartiennent aux première et deuxième parties courantes du graphe de flots de données respectivement. On définit les composants d'origine $x'_i$ et d'arrivée $x''_j$ associés aux acteurs d'origine $a_i$ et d'arrivée $a_j$. On notera que de manière générale, les composants d'origine $x'_i$ et d'arrivée $x''_j$ peuvent appartenir à un unique vecteur courant de répétition $X'$ représentatif des première et deuxième parties courantes du graphe ou à deux vecteurs courants de répétition distincts $X'$ et $X''$ représentatifs des première et deuxième parties courantes du graphe respectivement.

La définition de la connexion unidirectionnelle courante comporte l'attribution d'un taux de production $r_i$ relatif à l'acteur d'origine $a_i$ et d'un taux de consommation $r_j$ relatif à l'acteur d'arrivée $a_j$.

On peut par exemple considérer qu'un graphe de flots de données est en construction et qu'une nouvelle connexion courante est établie entre l'acteur d'origine $a_i$ et l'acteur d'arrivée $a_j$. Ce cas est résumé dans l'Algorithme décrit dans le tableau 1 ci-dessous. Dans cet Algorithme, on considère deux vecteurs de répétition $X'$ et $X''$ correspondant respectivement aux première et deuxième parties courantes du graphe de flots de données. On note i l'indice du $i^{\text{éme}}$ composant du vecteur $X'$ et j l'indice du $j^{\text{éme}}$ composant du vecteur $X''$. On note $r_i$ le taux de production correspondant au composant $x'_i$ du vecteur $X'$ et $r_j$ le taux de consommation correspondant au composant $x''_j$ du vecteur $X''$. On note les opérations « ppcm » et « pgcd » par « lcm » et « gcd » respectivement. En outre, on note X le vecteur de répétition résultant correspondant au nouveau graphe.

```
Algorithme
1: if r_i x'_i = r_j x''_j then
2:   c_flag ← true                        the new connection is consistent
3: if X' and X'' are two distinct vectors then
                                          connect two actors from two different graphs
4:   if c_flag is true then
5:       X ← [X' X'']
6:       STOP
7:   else
8:       m ← lcm(r_i; r_j)
9:       d ← gcd(x'_i; x''_j)
10:      ci ← (m/d)(x''_j/r_i)
11:      cj ← (m/d)(x'_i/r_j)
12:      d ← gcd(c_i; c_j)
13:      c_i ← c_i/d
14:      c_j ← c_j/d
15:      x ← [c_iX' c_jX'']
16:      STOP
17: else                                  connect two actors of the same graph
18:   if c_flag is true then
19:       X ← X'
20:       STOP
21:   else
22:       Mark this connection as not consistent
23:       Optional: Send error message
24:       STOP
```

A l'étape E2, afin d'éviter des opérations inutiles, on vérifie d'abord un indicateur de cohérence locale de la connexion unidirectionnelle courante (ligne 1 de l'Algorithme). Cet indicateur de cohérence locale examine si le produit du taux de production $r_i$ fois le composant d'origine $x_i$ est égal au produit du taux de consommation $r_j$ fois le composant d'arrivée $x_j$ (i.e., $r_i*x_i = r_j*x_j$). Quel que soit l'issue de ce test, on considère aux étapes suivantes deux cas. Un premier cas où les deux acteurs proviennent de deux vecteurs de répétition différents, c'est-à-dire qu'il n'y avait pas de connexion entre les deux acteurs avant la nouvelle connexion, et un deuxième cas où les deux acteurs proviennent du même graphe, c'est-à-dire qu'ils ont le même vecteur de répétition. Selon l'issue de ces deux différents cas, on définit aux étapes E4-E6 ou E8-E9 un vecteur courant de répétition résultant représentatif des première et deuxième parties courantes du graphe de flots de données.

En effet, si le test de l'étape E2 est positif, c'est-à-dire, au cas où la connexion unidirectionnelle courante vérifie l'indicateur de cohérence locale, on considère que le drapeau de cohérence (c_flag) est vrai sur la ligne 2 de l'Algorithme et on va à l'étape E3. Sinon, on va à l'étape E7.

Les étapes E3-E6 concernent le cas où la connexion unidirectionnelle courante vérifie l'indicateur de cohérence locale. Plus particulièrement, l'étape E3 est un test pour vérifier si les acteurs d'origine $a_i$ et d'arrivée $a_j$ sont associés à deux vecteurs courants de répétitions distincts, dits vecteurs de répétition d'origine X' et d'arrivée X" (i.e. le cas où il n'existait pas de connexion entre les acteurs d'origine $a_i$ et d'arrivée $a_j$ avant la connexion unidirectionnelle courante). Si oui, on va à l'étape E4 et sinon, on va à l'étape E6.

L'étape E4 concerne le cas où les deux acteurs proviennent de deux vecteurs de répétition différents et que la nouvelle connexion est cohérente. Dans ce cas, on construit le vecteur courant de répétition résultant X en concaténant les vecteurs de répétitions d'origine X' et d'arrivée X" et on s'arrête à l'étape E5 où le graphe est considéré comme étant cohérent. Cela correspond aux lignes 3 à 6 de l'Algorithme ci-dessus.

L'étape E6 concerne le cas où les acteurs d'origine $a_i$ et d'arrivée $a_j$ sont associés à un unique vecteur courant de répétition (i.e., ils viennent du même graphe). Alors, dans ce cas, le vecteur courant de répétition résultant X est égal à l'unique vecteur courant de répétition X'. Autrement dit, étant donné que les deux acteurs qu'on souhaite associer proviennent du même vecteur de répétition et que l'indicateur de cohérence est vrai, alors l'unique vecteur courant de répétition X' n'est pas modifié et on s'arrête à l'étape E5 où le graphe est considéré comme étant cohérent. Cela correspond aux lignes 18-20 de l'Algorithme ci-dessus.

En revanche, si l'issue de l'étape E2 est négatif, c'est-dire, si la connexion unidirectionnelle courante ne vérifie pas l'indicateur de cohérence locale, alors on examine les étapes E7-E9.

L'étape E7 est un test similaire à celui de l'étape E3 dans lequel on vérifie si les acteurs d'origine $a_i$ et d'arrivée $a_j$ sont associés à deux vecteurs courants de répétitions distincts, dits vecteurs de répétition d'origine X' et d'arrivée X". Si oui, on va à l'étape E8 et sinon, on va à l'étape E10.

A l'étape E8, on calcule les deux nombres naturels (i.e. les coefficients de production $c_i$ et de consommation $c_j$) vérifiant l'équation (3) ci-dessus. Autrement dit, étant donné que la nouvelle connexion n'est pas cohérente, les coefficients $c_i$ et $c_j$ définis dans l'équation (7) sont calculés aux lignes 8 à 14 de l'Algorithme ci-dessus.

A l'étape E9, on construit le vecteur courant de répétition résultant X (ligne 15 de l'Algorithme) en concaténant d'une part le vecteur de répétitions d'origine X' après l'avoir multiplié par le coefficient de production $c_i$ avec d'autre part, le vecteur de répétitions d'arrivée X" après l'avoir multiplié par le coefficient de consommation $c_j$. Ensuite, on s'arrête à l'étape E5 où l'on considère que le graphe est cohérent.

L'étape E10 concerne le cas où les acteurs d'origine $a_i$ et d'arrivée $a_j$ sont associés à un unique vecteur courant de répétition (i.e. les acteurs viennent du même graphe), alors la connexion unidirectionnelle courante est identifiée comme étant non cohérente (i.e. le graphe résultant n'est pas cohérent). Cela correspond aux lignes 22-24 de l'Algorithme.

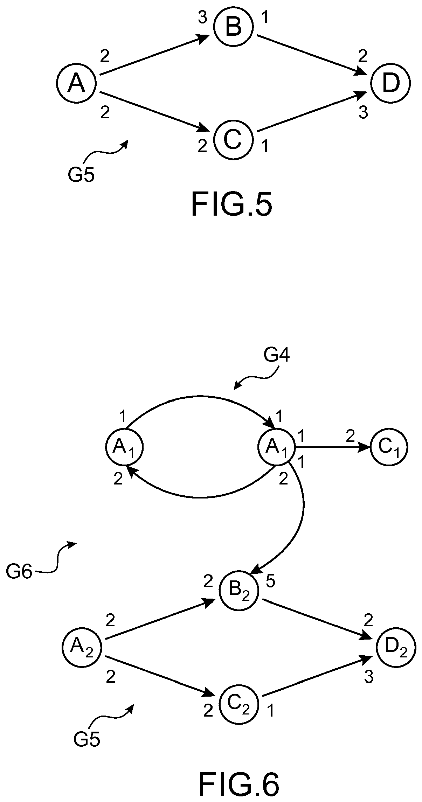

La Fig. 5 illustre de manière schématique la construction d'un graphe selon le procédé de la Fig. 4.

Plus particulièrement, la construction du graphe G5 de la figure 5 est une application de l'Algorithme représenté ci-dessus. Selon cet exemple, quatre acteurs A, B, C et D sont créés, chacun d'entre eux a un vecteur de répétition X= (1). Les connexions unidirectionnelles sont établies dans l'ordre suivant: (A → B), (A → C), (B → D), et (C → D). Après la connexion (A → B), les calculs selon l'Algorithme donnent les valeurs suivantes : $c_i$ = 3, $c_j$ = 2 et X = (3 2), car les deux acteurs proviennent de deux vecteurs de répétition différents. De manière similaire, $c_i$ = 1, $c_j$ = 3 et X = (3 2 3) lorsque la connexion (A → C) est établie. La connexion (B → D) souligne l'importance des lignes 12-14 dans l'Algorithme. En effet, avant la ligne 12, $c_i$ = $c_j$ = 2. Toutefois, en utilisant ces coefficients, on n'obtient pas un vecteur de répétition minimal lors de la mise à jour du vecteur de répétition X comme à la ligne 15, d'où l'intérêt de diviser les coefficients par d (lignes 13 et 14). Le cas exprimé sur les lignes 17 et 18 de l'Algorithme illustre la connexion (C → D) où le vecteur de répétition ne change pas, il en est de même après la connexion (C → D), X = (3 2 3 1).

L'exemple de la Fig. 5 montre bien l'application de l'Algorithme sur un graphe G5 donné. À partir de cet exemple, on observe que les lignes 8-14 garantissent un ensemble de coefficients entiers nécessaires pour obtenir un vecteur de répétition minimal. En outre, la vérification de la cohérence locale selon le procédé de la présente invention montre très avantageusement comment le nombre d'opérations requises est réduit au minimum, ce qui est très avantageux en particulier, dans le cas d'applications modulaires.

La Fig. 6 illustre de manière schématique la connexion de deux graphes distincts, selon le procédé de la présente invention.

L'exemple de la Fig. 6 est une application de flots de données modulaire, dans laquelle le graphe G5 de flots de données représenté sur la Fig. 5 est ajouté au graphe G4 de flots de données représenté sur la Fig. 3 pour former un nouveau graphe G6. La propriété de cohérence ayant déjà été vérifiée pour les deux graphes G4 et G5, seule la nouvelle connexion entre l'acteur B1 du premier graphe G4 et l'acteur B2 du second graphe G5 est à vérifier. En appliquant l'Algorithme ci-dessus avec les entrées X'= (2 2 1), X"= (3 2 3 1), i = 2, j = 2, $r_i$ = 1, et $r_j$ = 5, on obtient $c_i$ = 5 et $c_j$ = 1. Le vecteur de répétition résultant donné par la sortie de l'Algorithme est X = (10 10 5 3 2 3 1). On remarque que le vecteur courant de répétition résultant X du graphe G6 est construit en concaténant le premier vecteur de répétition X' du graphe G4 après l'avoir multiplié par le coefficient de production $c_i$=5 avec le deuxième vecteur de répétition X" du graphe G5. On notera que les quatre derniers composants sont identiques à ceux du deuxième vecteur de répétition X" car le coefficient de consommation $c_j$=1.

L'exemple de la Fig. 6 montre bien que lorsque deux graphes G4 et G5 cohérents sont connectés, le procédé selon la présente invention permet de vérifier la propriété de cohérence de manière locale de sorte qu'il n'est plus nécessaire de revérifier la cohérence du graphe résultant G6. En effet, le procédé selon la présente invention ne vérifie que les nouvelles connexions et déduit le vecteur de répétition résultant des deux vecteurs de répétition initiaux. C'est un avantage très important par rapport aux méthodes classiques de l'art antérieur, pour lesquelles une nouvelle matrice de topologie doit être calculée et une nouvelle équation matricielle doit être résolue.

En outre, l'application modulaire décrite dans de la Fig. 6 peut également être vue comme la construction d'un premier sous-graphe G4 dans laquelle trois acteurs sont d'abord créés et connectés entre eux, puis la construction d'un deuxième sous-graphe G5 dans laquelle quatre autres acteurs sont créés et connectés entre eux, et enfin les deux sous-graphes G4 et G5 sont connectés entre eux pour former un graphe résultant G6.

On notera que la cohérence est vérifiée lors de la construction de chaque sous-graphe G4, G5 en attribuant à chaque acteur d'arrivée $a_j$ additionnel un vecteur additionnel de répétition dont son unique composant $x_i$ est égal à 1.

L'acteur d'arrivée $a_j$ additionnel est relié par une connexion unidirectionnelle courante à un acteur d'origine $a_i$ appartenant au sous-graphe de flots de données en construction.

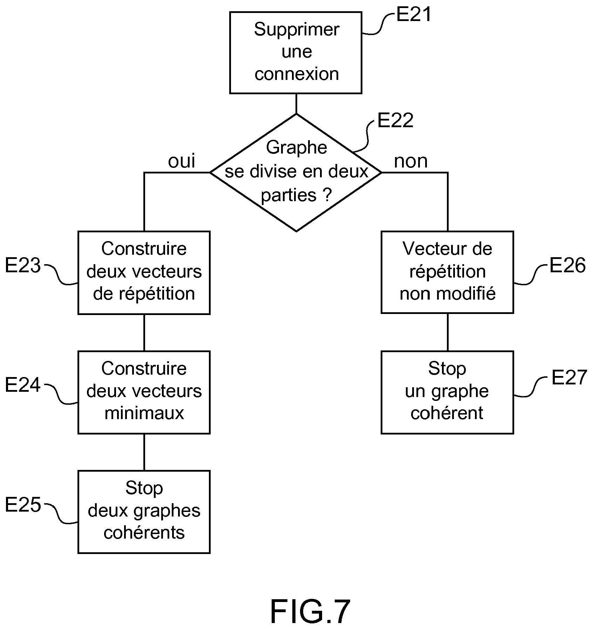

La Fig. 7 est un organigramme illustrant les étapes d'un procédé de validation comportant une opération de suppression, selon un mode de réalisation préféré de l'invention.

Dans ce procédé, on vérifie la cohérence d'un graphe de flots de données lors de la suppression d'une connexion unidirectionnelle de ce graphe.

A l'étape E21, on supprime une connexion donnée du graphe de flots de données.

L'étape E22 est un test pour vérifier si le graphe de flots de données initial se divise en deux parties distinctes ou pas. Si le graphe de flots de données se divise en deux parties distinctes, alors on va à l'étape E23 et sinon, on va à l'étape E26.

L'étape E23 concerne le cas où le graphe de flots de données se divise en des premier et deuxième sous-graphes de flots de données après la suppression de la connexion unidirectionnelle. Dans ce cas, on construit un premier vecteur de répétition X' en regroupant les composants du vecteur de répétition initial relatifs au premier sous-graphe de flots de données, et on construit un deuxième vecteur de répétition X" en regroupant les composants du vecteur de répétition initial relatifs au deuxième sous-graphe de flots de données.

Eventuellement, à l'étape E24, on construit des premier et deuxième vecteurs de répétition minimaux X* et X** en divisant le premier vecteur de répétition X' par le pgcd de ses composants et également, en divisant le deuxième vecteur de répétition X" par le pgcd de ses composants.

A l'étape E25, on obtient deux graphes de flots de données distincts et cohérents.

L'étape E26 concerne le cas où le graphe de flots de données reste connexe après la suppression de la connexion unidirectionnelle. Alors dans ce cas, on ne modifie pas le vecteur de répétition initial.

A l'étape E27, on a toujours un seul graphe cohérent.

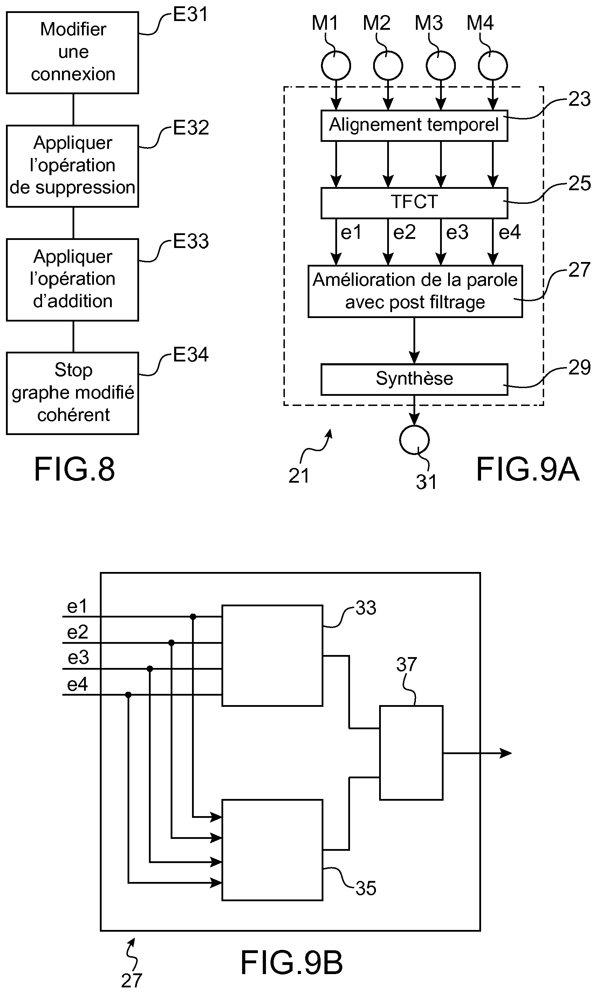

La Fig. 8 est un organigramme illustrant les étapes d'un procédé de validation comportant une opération de modification, selon un mode de réalisation préféré de l'invention.

Dans ce procédé on vérifie la cohérence d'un graphe de flots de données lors de la modification d'une connexion unidirectionnelle de ce graphe.

A l'étape E31, on modifie une connexion donnée du graphe de flots de données en lui attribuant des nouveaux taux de production $r'_i$ et de consommation $r'_j$ relatifs aux acteurs d'origine $a_i$ et d'arrivée $a_j$ reliés par cette connexion unidirectionnelle.

A l'étape E32, on applique l'opération de suppression d'une connexion unidirectionnelle selon les étapes du procédé de la Fig. 7.

A l'étape E33, on applique l'opération d'addition d'une connexion unidirectionnelle décrite par les procédés de la Fig. 4 selon les nouveaux taux de production $r'_i$ et de consommation $r'_j$.

A l'étape E34, on obtient un graphe modifié et cohérent.

Les exemples et modes de réalisations présentés ci-dessus soulignent les avantages de la vérification locale de la propriété de cohérence. Sur les exemples considérés, on voit que le calcul de la matrice de topologie n'est pas nécessaire et que le vecteur de répétition minimale peut être trouvé de manière très efficace et avec très peu de calcul. Un autre avantage réside dans le fait que les éléments incohérents peuvent être identifiés et qu'il n'est pas nécessaire de reconsidérer le graphe en son entier pour décider de sa cohérence.

Par ailleurs, on notera que le procédé selon l'invention peut être appliqué de manière incrémentielle lors de la construction du graphe de flots de données. En variante, il peut également être appliqué après la construction d'un graphe, sur chacune de ses connexions.

La présente invention s'applique à tous les systèmes à flot de données. En particulier, elle s'applique aux systèmes de traitement de signal numérique. En effet, le système de traitement peut être modélisé par un système flots de données comportant des acteurs connectés entre eux par des connexions de communications unidirectionnelles. Chaque acteur est configuré pour recevoir des données d'entrée et pour délivrer des données de sortie.

A titre d'exemple, le système de traitement de signal numérique peut être un système d'imagerie médicale, un système de vision par ordinateur, un système de codage et compression, un système de conversion de la fréquence d'échantillonnage audio, un système de conception d'outils pour les systèmes de communication sans fil, un système embarqué, etc.

Ainsi, le système de traitement de signal peut être modélisé par un graphe de flots de données en construction selon une approche incrémentale pouvant être appliquée lors de la construction du graphe. La construction d'un graphe incohérent peut être arrêtée dès qu'un élément incohérent a été identifié.

En outre, la modélisation du système de traitement de signal peut être réalisée de manière modulaire. Supposons qu'on souhaite modéliser un système embarqué d'anticollision dans un véhicule et qu'on souhaite ajouter un module de radar à un module de vision par caméras. Supposons que chacun des modules de radar et de vision est décrit par un graphe cohérent. La cohérence de la combinaison des deux modules peut être déterminée selon la présente invention en vérifiant uniquement les modifications générées par la combinaison, telles que l'ajout des connexions entre les deux graphes, et peut ainsi réduire le nombre d'opérations requises pour le contrôle de la cohérence.

La Fig. 9 illustre à titre d'exemple la vérification de cohérence dans un système de flots de données modélisant un dispositif d'amélioration de la parole multicanal, selon la présente invention.

Le dispositif 21 d'amélioration de la parole multicanal (multichannel speech enhancement, en anglais) est connecté à un réseau de quatre microphones M1-M4. Les signaux bruyants provenant de ces quatre microphones M1-M4 sont traités par un ensemble d'unités 23, 25, 27 et 29 de traitement de signal compris dans le dispositif 21 pour extraire le signal de la parole améliorée à la sortie 31. En effet, le dispositif 21 d'amélioration de la parole comporte une unité d'alignement temporel ou de synchronisation 23, une unité de transformation de Fourier à court terme 25 (TFCT), une unité d'amélioration du signal avec post-filtrage 27 et une unité d'addition ou de synthèse 29.

En particulier, l'unité d'amélioration de la parole avec post-filtrage 27 comporte un premier module 33 de filtrage spatial MVDR (Minimum Variance Distortionless Response), un deuxième module 35 d'estimation de post-filtrage et un troisième module 37 de post-filtrage. Les signaux e1-e4 provenant de l'unité 25 de transformation de Fourier sont injectés d'une part dans le premier module 33 de filtrage spatial (Beamformer, en anglais) et d'autre part, dans le deuxième module 35 d'estimation de post-filtrage. En outre, les signaux de sorties des premier 33 et deuxième 35 modules sont injectés dans le troisième module 37 de post-filtrage et le signal de sortie de ce dernier est injecté dans l'unité de synthèse 29. On notera que chacun des modules 33, 35 et 37 peut comporter un ensemble d'acteurs. Ainsi, l'unité de post-filtrage 37 peut être modélisée par un graphe de flots de données où la propriété de cohérence est vérifiée sur tous les acteurs selon le procédé de la présente invention.

En outre, une fois que la propriété de cohérence a été vérifiée sur tous les modules 33, 35, 37 de cette application, on peut en modifier certains. Supposons par exemple que l'application d'amélioration de la parole multicanal utilise un post-filtre de McCowan pour le module de post-filtrage 37. Ce filtre peut être remplacé par un post-filtre de Wiener afin d'obtenir une estimation plus précise de la densité spectrale du bruit. Dans ce cas, il n'est pas nécessaire de vérifier à nouveau la propriété de cohérence sur l'ensemble des modules. En effet, si le nouveau module de post-filtrage vérifie la propriété de cohérence, ceci n'impacte pas la propriété de cohérence des autres modules et on en conclut que toute l'application vérifie la propriété de cohérence selon le procédé de la présente invention.

## Références

1. Lee, E.A., Messerschmitt, D.G.: Synchronous data ow. Proceedings of the IEEE 75(9), 1235{1245 (1987).
2. Lee, E.A., Messerschmitt, D.G.: Static scheduling of synchronous data ow programs for digital signal processing; IEEE Transactions on computers 100(1), 24{35 (1987).

## Revendications

1. Procédé mis en œuvre par ordinateur de validation d'un système flots de données représenté par un graphe de flots de données comportant des acteurs présentant des taux de production et des taux de consommation déterminés, ledit procédé étant **caractérisé par** une vérification incrémentielle dans laquelle la cohérence d'une connexion unidirectionnelle courante reliant une première partie courante du graphe de flots de données à une deuxième partie courante du graphe de flots de données est localement vérifiée à chaque incrément ; ladite vérification incrémentielle comportant les étapes suivantes :

   - définir des acteurs d'origine et d'arrivée reliés par ladite connexion unidirectionnelle courante, les acteurs d'origine et d'arrivée appartenant auxdites première et deuxième parties courantes du graphe de flots de données respectivement, les acteurs d'origine et d'arrivée étant définis par des composants d'origine $x_i$ et d'arrivée $x_j$ respectivement pouvant appartenir à un unique vecteur courant de répétition ou à deux vecteurs courants de répétition représentatif(s) desdites première et deuxième parties courantes du graphe de flots de données,
   - attribuer à ladite connexion unidirectionnelle courante un taux de production $r_i$ relatif à l'acteur d'origine et un taux de consommation $r_j$ relatif à l'acteur d'arrivée,
   - vérifier un indicateur de cohérence locale de ladite connexion unidirectionnelle courante, ledit indicateur de cohérence locale examinant si le produit dudit taux de production $r_i$ fois ledit composant d'origine $x_i$ est égal au produit dudit taux de consommation $r_j$ fois ledit composant d'arrivée $x_j$, la connexion unidirectionnelle courante étant considérée cohérente si l'égalité est satisfaite, et
   - définir un vecteur courant de répétition résultant représentatif desdites première et deuxième parties courantes du graphe de flots de données.

**2.** Procédé de validation selon la revendication 1, **caractérisé en ce qu'**au cas où ladite connexion unidirectionnelle courante vérifie l'indicateur de cohérence locale, ledit procédé comporte les étapes suivantes :

- si les acteurs d'origine et d'arrivée sont associés à deux vecteurs courants de répétitions distincts, dits vecteurs de répétitions d'origine et d'arrivée, alors on construit le vecteur courant de répétition résultant en concaténant lesdits vecteurs de répétions d'origine et d'arrivée, et
- si les acteurs d'origine et d'arrivée sont associés à un unique vecteur courant de répétition, alors le vecteur courant de répétition résultant est égal audit unique vecteur courant de répétition.

**3.** Procédé de validation selon la revendication 1, **caractérisé en ce qu'**au cas où ladite connexion unidirectionnelle courante ne vérifie pas l'indicateur de cohérence locale, ledit procédé comporte les étapes suivantes :

- si les acteurs d'origine et d'arrivée sont associés à deux vecteurs courants de répétitions distincts, dits vecteurs de répétitions d'origine et d'arrivée, alors on calcule deux nombres naturels, dits coefficient de production $c_i$ et coefficient de consommation $c_j$ vérifiant une égalité entre d'une part le produit dudit coefficient de production $c_i$ fois ledit taux de production $r_i$ fois ledit composant d'origine $x_i$ et d'autre part, le produit dudit coefficient de consommation $c_j$ fois ledit taux de consommation $r_j$ fois ledit composant d'arrivée $x_j$, et on construit le vecteur courant de répétition résultant en concaténant le vecteur de répétition d'origine après l'avoir multiplié par le coefficient de production $c_i$ avec le vecteur de répétition d'arrivée après l'avoir multiplié par le coefficient de consommation $c_j$, et
- si les acteurs d'origine et d'arrivée sont associés à un unique vecteur courant de répétition, alors la connexion unidirectionnelle courante est identifiée comme étant non cohérente.

**4.** Procédé de validation selon la revendication 3, **caractérisé en ce que** les coefficients de production $c_i$ et de consommation $c_j$ sont donnés par les équations suivantes :

$$c_i = \frac{m}{d}\frac{x_j}{r_i} \ /pgcd\left(\frac{m}{d}\frac{x_j}{r_i}, \frac{m}{d}\frac{x_i}{r_j}\right) \quad et \quad c_j = \frac{m}{d}\frac{x_i}{r_j} \ /pgcd\left(\frac{m}{d}\frac{x_j}{r_i}, \frac{m}{d}\frac{x_i}{r_j}\right)$$

où

$$m = ppcm(r_i, r_j) \ et \ d = pgcd(x_i, x_j)$$

.

**5.** Procédé de validation selon l'une quelconque des revendications 1 à 4, **caractérisé en ce qu'**il comporte une opération d'addition d'une nouvelle connexion unidirectionnelle entre des première et deuxième parties courantes du graphe de flots de données.

**6.** Procédé de validation selon l'une quelconque des revendications 1 à 4, **caractérisé en ce qu'**il comporte une opération de suppression d'une connexion unidirectionnelle du graphe de flots de données représenté par un unique vecteur de répétition, dit vecteur de répétition initial, selon les étapes suivantes :

- si le graphe de flots de données se divise en des premier et deuxième sous-graphes de flots de données après la suppression de ladite connexion unidirectionnelle, alors on construit un premier vecteur de répétition en regroupant les composants dudit vecteur de répétition initial relatifs audit premier sous-graphe de flots de données, et on construit un deuxième vecteur de répétition en regroupant les composants du vecteur de répétition initial relatifs audit deuxième sous-graphe de flots de données, et
- si le graphe reste connexe après la suppression de ladite connexion unidirectionnelle, alors on ne modifie pas ledit vecteur de répétition initial.

**7.** Procédé de validation selon les revendications 5 et 6, **caractérisé en ce qu'**il comporte une opération de modification d'une connexion unidirectionnelle, selon les étapes suivantes:

- attribuer des nouveaux taux de production $r'_i$ et de consommation $r'_j$ relatifs aux acteurs d'origine et d'arrivée reliés par ladite connexion unidirectionnelle,
- appliquer l'opération de suppression d'une connexion unidirectionnelle selon la revendication 7, et
- appliquer l'opération d'addition d'une connexion unidirectionnelle selon la revendication 6.

**EP 3 908 926 B1**

8. Procédé de validation selon l'une quelconque des revendications 1 à 7, **caractérisé en ce qu'**il comporte la vérification de la cohérence du graphe de flots de données lors de sa construction ou de sa modification, en attribuant à chaque acteur d'arrivée additionnel un vecteur additionnel de répétition dont son unique composant $x_i$ est égal à 1, ledit acteur d'arrivée additionnel étant relié par ladite connexion unidirectionnelle courante à un acteur d'origine appartenant audit graphe courant de flots de données en construction ou en modification.

9. Système de traitement de signal numérique conçu en utilisant le procédé de validation selon l'une quelconque des revendications précédentes, **caractérisé en ce que** ledit système de traitement est modélisé par un système flots de données comportant des acteurs connectés entre eux par des connexions de communications unidirectionnelles, chaque acteur étant configuré pour recevoir des données d'entrée et pour délivrer des données de sortie.

10. Système de traitement de signal numérique selon la revendication 9, **caractérisé en ce que** ledit système est un système parmi l'un quelconque des systèmes de traitement suivants : système d'imagerie médicale, système de vision par ordinateur, système de codage et compression vidéo, système de conversion d'une fréquence d'échantillonnage audio, système de conception d'outils pour les systèmes de communication sans fil, système d'amélioration de la parole multicanal, système embarqué.

11. Dispositif de validation d'un système flots de données représenté par un graphe de flots de données comportant des acteurs présentant des taux de production et des taux de consommation déterminés, **caractérisé en ce que** ledit dispositif comporte :

   - un module d'acquisition (9) configuré pour acquérir des données concernant des première et deuxième parties courantes du graphe de flots de données, et
   - un module de supervision (11) configuré pour vérifier de manière incrémentielle la cohérence dudit système flots de données en vérifiant à chaque incrément la cohérence locale d'une connexion unidirectionnelle courante reliant la première partie courante du graphe de flots de données à la deuxième partie courante du graphe de flots de données, ledit module de supervision (11) étant configuré pour vérifier la cohérence selon les étapes suivantes :

   - définir des acteurs d'origine et d'arrivée reliés par ladite connexion unidirectionnelle courante, les acteurs d'origine et d'arrivée appartenant auxdites première et deuxième parties courantes du graphe de flots de données respectivement, les acteurs d'origine et d'arrivée étant définis par des composants d'origine $x_i$ et d'arrivée $x_j$ respectivement pouvant appartenir à un unique vecteur courant de répétition ou à deux vecteurs courants de répétition représentatif(s) desdites première et deuxième parties courantes du graphe de flots de données,
   - attribuer à ladite connexion unidirectionnelle courante un taux de production $r_i$ relatif à l'acteur d'origine et un taux de consommation $r_j$ relatif à l'acteur d'arrivée,
   - vérifier un indicateur de cohérence locale de ladite connexion unidirectionnelle courante, ledit indicateur de cohérence locale examinant si le produit dudit taux de production $r_i$ fois ledit composant d'origine $x_i$ est égal au produit dudit taux de consommation $r_j$ fois ledit composant d'arrivée $x_j$, la connexion unidirectionnelle courante étant considérée cohérente si l'égalité est satisfaite, et
   - définir un vecteur courant de répétition résultant représentatif desdites première et deuxième parties courantes du graphe de flots de données.

**Patentansprüche**

1. Computerimplementiertes Verfahren zum Validieren eines Datenflusssystems, das durch ein Datenflussdiagramm dargestellt wird, das Akteure mit bestimmten Produktionsraten und Verbrauchsraten aufweist, wobei das Verfahren durch eine inkrementelle Überprüfung gekennzeichnet ist, bei der die Kohärenz einer laufenden unidirektionalen Verbindung, die einen laufenden ersten Teil des Datenflussdiagramms mit einem laufenden zweiten Teil des Datenflussdiagramms verbindet, bei jedem Inkrement lokal überprüft wird; wobei die inkrementelle Überprüfung die folgenden Schritte umfasst:

   - Definieren von Quell- und Zielakteuren, die durch die laufende unidirektionale Verbindung verbunden sind, wobei die Quell- und Zielakteure zu den ersten beziehungsweise zweiten laufenden Teilen des Datenflussdiagramms gehören, wobei die Quell- und Zielakteure durch die Quellkomponenten $X_i$ beziehungsweise Zielkomponenten $X_j$ definiert sind, die zu einem einzigen laufenden Wiederholungsvektor oder zu zwei laufenden Wiederholungsvektoren gehören können, die für den ersten und den zweiten laufenden Teil des Datenflussdiagramms repräsentativ sind,
- Zuweisen der laufenden unidirektionalen Verbindung einer Produktionsrate $r_i$ in Bezug auf den Quellakteur und einer Verbrauchsrate $r_j$ in Bezug auf den Zielakteur,
- Überprüfen eines lokalen Kohärenzindikators der laufenden unidirektionalen Verbindung, wobei der lokale Kohärenzindikator untersucht, ob das Produkt aus der Produktionsrate $r_i$ mal der Quellkomponente $\mathbf{x}_i$ gleich dem Produkt aus der Verbrauchsrate $r_j$ mal der Zielkomponente $\mathbf{x}_j$ ist; wobei die laufende unidirektionale Verbindung als kohärent angesehen wird, wenn die Gleichheit erfüllt ist, und
- Definieren eines sich ergebenden laufenden Wiederholungsvektors, der für den ersten und zweiten laufenden Teil des Datenflussdiagramms repräsentativ ist.

2. Validierungsverfahren nach Anspruch 1, **dadurch gekennzeichnet, dass** für den Fall, dass die laufende unidirektionale Verbindung den lokalen Kohärenzindikator überprüft, wobei das Verfahren die folgenden Schritte aufweist:

   - wenn die Quell- und Zielakteure zwei verschiedenen laufenden Wiederholungsvektoren, den sogenannten Quell- und Zielwiederholungsvektoren, zugeordnet sind, dann wird der sich aus der Verkettung der Quell- und Zielwiederholungsvektoren ergebende laufende Wiederholungsvektor konstruiert, und
   - wenn die Quell- und Zielakteure einem einzigen laufenden Wiederholungsvektor zugeordnet sind, dann ist der sich ergebende laufende Wiederholungsvektor gleich diesem einzigen laufenden Wiederholungsvektor.

3. Validierungsverfahren nach Anspruch 1, **dadurch gekennzeichnet, dass** für den Fall, dass die laufende unidirektionale Verbindung den lokalen Kohärenzindikator nicht überprüft, wobei das Verfahren die folgenden Schritte aufweist:

   - wenn die Quell- und Zielakteure zwei verschiedenen laufenden Wiederholungsvektoren, den sogenannten Quell- und Zielwiederholungsvektoren, zugeordnet sind, dann werden zwei natürliche Zahlen, der sogenannte Produktionskoeffizient $c_i$ und der sogenannte Verbrauchskoeffizient $c_j$, berechnet und eine Gleichheit zwischen einerseits dem Produkt aus dem Produktionskoeffizienten $c_i$, der Produktionsrate $r_i$ mal der Quellkomponente $\mathbf{X}_i$ und andererseits dem Produkt aus dem Verbrauchskoeffizienten $\mathbf{c}_j$ mal der Verbrauchsrate $r_j$ mal der Zielkomponente $\mathbf{x}_j$ überprüft; und der sich ergebende Wiederholungsflussvektor wird durch Verkettung des Quellwiederholungsvektors nach Multiplikation mit dem Produktionskoeffizienten $\mathbf{c}_j$ mit dem Zielwiederholungsvektor nach Multiplikation mit dem Verbrauchskoeffizienten $\mathbf{c}_j$ aufgebaut; und - wenn die Quell- und Zielakteure einem einzigen laufenden Wiederholungsvektor zugeordnet sind, dann wird die laufende unidirektionale Verbindung als nicht kohärent identifiziert.

4. Validierungsverfahren nach Anspruch 3, **dadurch gekennzeichnet, dass** die Produktionskoeffizienten $c_i$ und Verbrauchskoeffizienten $c_j$ durch die folgenden Gleichungen gegeben sind:

$$c_i = \frac{m}{d}\frac{x_j}{r_i} \; /pgcd\left(\frac{m}{d}\frac{x_j}{r_i}, \frac{m}{d}\frac{x_i}{r_j}\right) \quad \text{und} \quad c_j = \frac{m}{d}\frac{x_i}{r_j} \; /pgcd\left(\frac{m}{d}\frac{x_j}{r_i}, \frac{m}{d}\frac{x_i}{r_j}\right)$$

wobei

$$m = ppcm\left(r_i, r_j\right) \; et \; d = pgcd\left(x_i, x_j\right)$$

5. Validierungsverfahren nach einem der Ansprüche 1 bis 4, **dadurch gekennzeichnet, dass** es einen Vorgang des Hinzufügens einer neuen unidirektionalen Verbindung zwischen den ersten und zweiten laufenden Teilen des Datenflussdiagramms aufweist.

6. Validierungsverfahren nach einem der Ansprüche 1 bis 4, **dadurch gekennzeichnet, dass** es einen Vorgang des Löschens einer unidirektionalen Verbindung des Datenflussdiagramms, das durch einen einzigen Wiederholungsvektor, den sogenannten anfänglichen Wiederholungsvektor, dargestellt wird, gemäß den folgenden Schritten aufweist:

   - wenn sich das Datenflussdiagramm nach dem Löschen der unidirektionalen Verbindung in erste und zweite Datenflussuntergraphen aufteilt, dann wird ein erster Wiederholungsvektor durch Gruppieren der Komponenten des Quellwiederholungsvektors in Bezug auf dieses erste Datenflussunterdiagramm aufgebaut, und ein zweiter Wiederholungsvektor durch Gruppieren der Komponenten des Quellwiederholungsvektors in Bezug auf dieses zweites Datenflussunterdiagramm aufgebaut, und

- wenn das Diagramm nach dem Löschen der unidirektionalen Vrbindung verbunden bleibt, dann wird der Quellwiederholungsvektor nicht geändert.

7. Validierungsverfahren nach Anspruch 5 und 6, **dadurch gekennzeichnet, dass** es einen Vorgang des Änderns einer unidirektionalen Verbindung gemäß den folgenden Schritten aufweist:

- Zuweisen neuer Produktions- $r'_i$ und Verbrauchsraten $r'_j$ für die durch die unidirektionale Verbindung verbundenen Quell- und Zielakteure,
- Anwenden des Vorgangs des Löschens einer unidirektionalen Verbindung nach Anspruch 7, und
- Anwenden des Vorgangs des Hinzufügens einer unidirektionalen Verbindung nach Anspruch 6.

8. Validierungsverfahren nach einem der Ansprüche 1 bis 7, **dadurch gekennzeichnet, dass** es die Überprüfung der Kohärenz des Datenflussdiagramms bei seinem Aufbau oder seiner Änderung aufweist, indem jedem zusätzlichen Quellakteur ein zusätzlicher Wiederholungsvektor zugewiesen wird, dessen einzige Komponente $X_i$ gleich 1 ist, wobei der zusätzliche Quellakteur durch die laufende unidirektionale Verbindung mit einem Quellakteur verbunden ist, der zu dem laufenden Datenflussdiagramm im Aufbau oder in Änderung gehört.

9. Digitales Signalverarbeitungssystem, das unter Verwendung des Validierungsverfahrens nach einem der vorhergehenden Ansprüche entworfen wurde, **dadurch gekennzeichnet, dass** das Verarbeitungssystem durch ein Datenflusssystem modelliert wird, das Akteure umfasst, die durch unidirektionale Kommunikationsverbindungen miteinander verbunden sind, wobei jeder Akteur so konfiguriert ist, dass er Eingangsdaten empfängt und Ausgangsdaten liefert.

10. Digitales Signalverarbeitungssystem nach Anspruch 9, **dadurch gekennzeichnet, dass** das System eines von einem der folgenden Verarbeitungssysteme ist: medizinisches Bildgebungssystem, Computersichtsystem, Videokodier- und -kompressionssystem, System zur Umwandlung einer Audio-Abtastrate, Tool-Design-System für drahtlose Kommunikationssysteme, Mehrkanal-Sprachverbesserungssystem, Onboard-System.

11. Vorrichtung zur Validierung eines Datenflusssystems, das durch ein Datenflussdiagramm dargestellt wird, das Akteure mit bestimmten Produktionsraten und Verbrauchsraten umfasst, **dadurch gekennzeichnet, dass** die Vorrichtung Folgendes umfasst:

- ein Erfassungsmodul (9), das so konfiguriert ist, dass es Daten bezüglich erster und zweiter laufender Teile des Datenflussdiagramms erfasst, und
- ein Überwachungsmodul (11), das so konfiguriert ist, dass es die Kohärenz des Datenflusssystems inkrementell überprüft, indem es bei jedem Inkrement die lokale Kohärenz einer laufenden unidirektionalen Verbindung überprüft, die den ersten laufenden Teil des Datenflussdiagramms mit dem zweiten laufenden Teil des Datenflussdiagramms verbindet, wobei das Überwachungsmodul (11) so konfiguriert ist, dass es die Kohärenz gemäß den folgenden Schritten überprüft:
- Definieren von Quell- und Zielakteuren, die durch die laufende unidirektionale Verbindung verbunden sind, wobei die Quell- und Zielakteure zu den ersten beziehungsweise zweiten laufenden Teilen des Datenflussdiagramms gehören, wobei die Quell- und Zielakteure durch die Quellkomponenten $X_i$ beziehungsweise Zielkomponenten $X_j$ definiert sind, die zu einem einzigen laufenden Wiederholungsvektor oder zu zwei laufenden Wiederholungsvektoren gehören können, die für den ersten und den zweiten laufenden Teil des Datenflussdiagramms repräsentativ sind,
- Zuweisen der laufenden unidirektionalen Verbindung einer Produktionsrate $r_i$ in Bezug auf den Quellakteur und einer Verbrauchsrate $r_j$ in Bezug auf den Zielakteur,
- Überprüfen eines lokalen Kohärenzindikators der laufenden unidirektionalen Verbindung, wobei der lokale Kohärenzindikator untersucht, ob das Produkt aus der Produktionsrate $r_i$ mal der Quellkomponente $X_i$ gleich dem Produkt aus der Verbrauchsrate $r_j$ mal der Zielkomponente $x_j$ ist; wobei die laufende unidirektionale Verbindung als kohärent angesehen wird, wenn die Gleichheit erfüllt ist, und
- Definieren eines sich ergebenden laufenden Wiederholungsvektors, der für den ersten und zweiten laufenden Teil des Datenflussdiagramms repräsentativ ist.

**Claims**

1. Method implemented by computer for validating a data flow system represented by a data flow graph including actors having determined production rates and consumption rates, said method being **characterised by** an incremental verification in which the consistency of a current unidirectional connection connecting a first current part of the data flow graph to a second current part of the data flow graph is locally verified at each increment; said incremental verification includes the following steps:

   - defining origin and destination actors connected by said current unidirectional connection, the origin and destination actors belonging to said first and second current parts of the data flow graph, respectively, the origin and destination actors being defined by origin $x_i$ and destination $x_j$ components, respectively, that can belong to a single current repetition vector or to two current repetition vectors representative of said first and second current parts of the data flow graph,
   - assigning to said current unidirectional connection a production rate $r_i$ relative to the origin actor and a consumption rate $r_j$ relative to the destination actor,
   - verifying an indicator of local consistency of said current unidirectional connection, said indicator of local consistency examining whether the product of said production rate $r_i$ times said origin component $x_i$ is equal to the product of said consumption rate $r_j$ times said destination component $x_j$, the current unidirectional connection being considered to be consistent if the equality is satisfied, and
   - defining a resulting current repetition vector representative of said first and second current parts of the data flow graph.

2. Validation method according to claim 1, **characterised in that** in the case in which said current unidirectional connection verifies the indicator of local consistency, said method includes the following steps:

   - if the origin and destination actors are associated with two distinct current repetition vectors, called origin and destination repetition vectors, then the resulting current repetition vector is constructed by concatenating said origin and destination repetition vectors, and
   - if the origin and destination actors are associated with a single current repetition vector, then the resulting current repetition vector is equal to said single current repetition vector.

3. Validation method according to claim 1, **characterised in that** in the case in which said current unidirectional connection does not verify the indicator of local consistency, said method includes the following steps:

   - if the origin and destination actors are associated with two distinct current repetition vectors, called origin and destination repetition vectors, then two natural numbers are calculated, called production coefficient $c_i$ and consumption coefficient $c_j$ verifying an equality between on the one hand the product of said production coefficient $c_i$ times said production rate $r_i$ times said origin component $x_i$ and on the other hand the product of said consumption coefficient $c_j$ times said consumption rate $r_j$ times said destination component $x_j$, and the resulting current repetition vector is constructed by concatenating the origin repetition vector after having multiplied it by the production coefficient $c_i$ with the destination repetition vector after having multiplied it by the consumption coefficient $c_j$, and
   - if the origin and destination actors are associated with a single current repetition vector, then the current unidirectional connection is identified as being inconsistent.

4. Validation method according to claim 3, **characterised in that** the production $c_i$ and consumption $c_j$ coefficients are given by the following equations:

$$c_i = \frac{m\,x_j}{d\,r_i} \Big/ pgcd\left(\frac{m\,x_j}{d\,r_i}, \frac{m\,x_i}{d\,r_j}\right) \quad \text{and} \quad c_j = \frac{m\,x_i}{d\,r_j} \Big/ pgcd\left(\frac{m\,x_j}{d\,r_i}, \frac{m\,x_i}{d\,r_j}\right)$$

where

$$m = ppcm\left(r_i, r_j\right) \text{ and } d = pgcd\left(x_i, x_j\right).$$

5. Validation method according to any one of claims 1 to 4, **characterised in that** it includes an operation of addition of a new unidirectional connection between first and second current parts of the data flow graph.

6. Validation method according to any one of claims 1 to 4, **characterised in that** it includes an operation of deletion of a unidirectional connection from the data flow graph represented by a single repetition vector, called initial repetition vector, according to the following steps:

- if the data flow graph is divided into first and second data flow subgraphs after the deletion of said unidirectional connection, then a first repetition vector is constructed by grouping together the components of said initial repetition vector relative to said first data flow subgraph, and a second repetition vector is constructed by grouping together the components of the initial repetition vector relative to said second data flow subgraph, and
- if the graph remains connected after the deletion of said unidirectional connection, then said initial repetition vector is not modified.

7. Validation method according to claims 5 and 6, **characterised in that** it includes an operation of modification of a unidirectional connection, according to the following steps:

- assigning new production $r'_i$ and consumption $r'_j$ rates relative to the origin and destination actors connected by said unidirectional connection,
- applying the operation of deletion of a unidirectional connection according to claim 7, and
- applying the operation of addition of a unidirectional connection according to claim 6.

8. Validation method according to any one of claims 1 to 7, **characterised in that** it includes the verification of the consistency of the data flow graph during its construction or its modification, by assigning to each additional destination actor an additional repetition vector, the only component $x_i$ of which is equal to 1, said additional destination actor being connected by said current unidirectional connection to an origin actor belonging to said current data flow graph being constructed or modified.

9. System for processing a digital signal designed by using the validation method according to any one of the previous claims, **characterised in that** said processing system is modelled by a data flow system including actors connected to each other by unidirectional communication connections, each actor being configured to receive input data and to deliver output data.

10. System for processing a digital signal according to claim 9, **characterised in that** said system is a system out of any one of the following processing systems: medical imaging system, computer vision system, video encoding and compression system, system for converting an audio sampling frequency, system for designing tools for wireless communication systems, multichannel speech enhancement system, onboard system.

11. Device for validating a data flow system represented by a data flow graph including actors having determined production rates and consumption rates, **characterised in that** said system includes:

- an acquisition module (9) configured to acquire data relating to first and second current parts of the data flow graph, and
- a supervision module (11) configured to incrementally verify the consistency of said data flow system by verifying at each increment the local consistency of a current unidirectional connection connecting the first current part of the data flow graph to the second current part of the data flow graph, said supervision module (11) being configured to verify the consistency according the following steps:

- defining origin and destination actors connected by said current unidirectional connection, the origin and destination actors belonging to said first and second current parts of the data flow graph, respectively, the origin and destination actors being defined by origin $x_i$ and destination $x_j$ components, respectively, that can belong to a single current repetition vector or to two current repetition vectors representative of said first and second current parts of the data flow graph,
- assigning to said current unidirectional connection a production rate $r_i$ relative to the origin actor and a consumption rate $r_j$ relative to the destination actor,
- verifying an indicator of local consistency of said current unidirectional connection, said indicator of local consistency examining whether the product of said production rate $r_i$ times said origin component $x_i$ is equal to the product of said consumption rate $r_j$ times said destination component $x_j$, said current unidirectional

connection being considered to be consistent if the equality is satisfied, and
- defining a resulting current repetition vector representative of said first and second current parts of the data flow graph.

FIG.1A

FIG.1B

FIG.1C

FIG.2

FIG.3

FIG.4

FIG.5

FIG.6

Supprimer
une
connexion — E21

Graphe
se divise en deux
parties ? — E22

oui    non

E23 — Construire
deux vecteurs
de répétition

Vecteur de
répétition
non modifié — E26

E24 — Construire
deux vecteurs
minimaux

Stop
un graphe
cohérent — E27

E25 — Stop
deux graphes
cohérents

# FIG.7

E31 — Modifier une connexion

E32 — Appliquer l'opération de suppression

E33 — Appliquer l'opération d'addition

E34 — Stop graphe modifié cohérent

## FIG.8

M1  M2  M3  M4

23 — Alignement temporel

25 — TFCT

e1  e2  e3  e4

27 — Amélioration de la parole avec post filtrage

29 — Synthèse

21

31

## FIG.9A

e1
e2
e3
e4

33

37

35

27

## FIG.9B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LEE, E.A.** ; **MESSERSCHMITT, D.G.** Synchronous data ow.. *Proceedings of the IEEE*, 1987, vol. 75 (9), 1235-1245

- **LEE, E.A.** ; **MESSERSCHMITT, D.G**. Static scheduling of synchronous data ow programs for digital signal processing;. *IEEE Transactions on computers*, 1987, vol. 100 (1), 24-35